# EUROPÄISCHE PATENTSCHRIFT

(11) **EP 2 617 083 B1**
(45) Veröffentlichungstag und Bekanntmachung des Hinweises auf die Patenterteilung: **05.07.2017**
(21) Anmeldenummer: 11745954.5
(22) Anmeldetag: 09.08.2011
(51) Int. Cl.: H01M 2/12

(54) **BATTERIE MIT VERMINDERTER KONDENSATBILDUNG DURCH WASSERABSCHEIDUNG**
BATTERY HAVING REDUCED CONDENSATE FORMATION DUE TO WATER SEPARATION
BATTERIE À FORMATION DE CONDENSAT RÉDUITE PAR SÉPARATION D'EAU

(30) Priorität: 14.09.2010 DE 102010040740
(43) Veröffentlichungstag der Anmeldung: 24.07.2013
(73) Patentinhaber: Samsung SDI Co., Ltd., Gyeonggi-do (KR); Robert Bosch GmbH, 70442 Stuttgart (DE)
(72) Erfinder: ENGEL, Florian, 70197 Stuttgart (DE); GLESS, Michael, 70437 Stuttgart-Zazenhausen (DE); BUBECK, Conrad, 73728 Esslingen (DE); RUEHLE, Andreas, 70374 Stuttgart (DE)
(74) Vertreter: Bee, Joachim
(86) Internationale Anmeldenummer: PCT/EP2011/063672
(87) Internationale Veröffentlichungsnummer: WO 2012/034790

(56) Entgegenhaltungen:
- EP-A1- 2 107 633
- WO-A1-2009/101725
- DE-A1-102007 011 026
- DE-A1-102008 043 784
- JP-U- H02 123 064
- US-A1- 2007 236 177

## Beschreibung

Die vorliegende Erfindung betrifft eine Batterie mit einem Lufttrocknungssystem zur Verminderung von Kondensatbildung im Batterieinneren.

### Stand der Technik

Batterien, insbesondere hochkapazitive Batterien für den Einsatz im Fahrzeugbereich wie beispielsweise hochkapazitive Lithium-Ionen-Batterien, zeichnen sich durch eine nicht unerhebliche Wärmeentwicklung während des Regel- oder Normalbetriebs aus. Da Batterien ihr optimales Leistungsvermögen nur in einem bestimmten Temperaturbereich zu Verfügung stellen können, ist es meist notwendig eine aktive Kühleinrichtung vorzusehen, die eine Überhitzung der Batterie verhindert.

Dabei ist es häufig der Fall, dass im Inneren der Batterie Temperaturen herrschen, die niedriger sind als die Temperatur der Umgebungsluft. Dringt nun Umgebungsluft in das Batterieinnere, zum Beispiel durch Druckausgleichsöffnungen im Batteriegehäuse, so kann die in dieser Umgebungsluft enthaltene Feuchtigkeit im Batterieinneren kondensieren und ggf. erhebliche Schäden anrichten.

Um beispielsweise die Korrosionsgefahr insbesondere an spannungsführenden Bauteilen im Batterieinneren zu minimieren ist der Einsatz von Systemen vorgeschlagen worden, die der Luft entweder im Batterieinneren oder vor dem Eintritt in das Batterieinnere Feuchtigkeit entziehen und damit eine Kondensatbildung an sensiblen Bauteilen in der Batterie vermindern.

In DE 10 2007 011 026 A1 ist eine Batterie vorgeschlagen worden, bei der eine Kühlfalle zum Kondensieren und Abführen von Feuchtigkeit aus dem Gehäuse vorgesehen ist. Allerdings ist diese Kühlfalle als separate, zusätzliche, mehrteilige Baugruppe offenbart. Dadurch sind bei der Herstellung der Batterie zusätzliche Montageschritte notwendig, die den Herstellprozess verlängern und damit auch verteuern.

In DE 10 2007 011 026 wird dabei eine Batterie offenbart, wobei die Batterie ein im Wesentlichen luftdichtes Gehäuse mit einer luftdurchlässigen Öffnung zum Druckausgleich umfasst. Ferner umfasst die Batterie eine Mehrzahl von im Gehäuse angeordneten Batteriezellen und eine aktive Kühleinrichtung zum Kühlen der Batteriezelle im Gehäuse, wobei die Kühleinrichtung ein Kühlfluid und einen Verteilerblock zum Verteilen des Kühlfluids aufweist, wobei im Verteilerblock eine Luftführung integriert ist, die derart ausgeführt und angeordnet ist, dass die luftdurchlässige Öffnung des Gehäuses über die Luftführung mit der Umgebungsluft in Kontakt steht.

In DE 10 2008 043 784 wird eine Batterie offenbart, wobei die Batterie ein im Wesentlichen luftdichtes Gehäuse mit einer luftdurchlässigen Öffnung zum Druckausgleich umfasst. Die Batterie umfasst darüber hinaus eine Mehrzahl von im Gehäuse angeordneten Batteriezellen und eine aktive Kühleinrichtung zum Kühlen der Batteriezellen im Gehäuse, wobei die Kühleinrichtung ein Kühlfluid und einen Verteilerblock zum Verteilen des Kühlfluids aufweist, wobei im Verteilerblock eine Luftführung integriert ist, die derart ausgeführt und angeordnet ist, dass die luftdurchlässige Öffnung des Gehäuses über die Luftführung mit der Umgebungsluft in Kontakt steht.

In EP 2 107 633 ist eine Batterie offenbart worden, die ein im Wesentlichen luftdichtes Gehäuse mit einer luftdurchlässigen Öffnung zum Druckausgleich umfasst. Die Batterie umfasst darüber hinaus eine Mehrzahl von im Gehäuse angeordneten Batteriezellen und eine aktive Kühleinrichtung zum Kühlen der Batteriezellen im Gehäuse, wobei die Kühleinrichtung ein Kühlfluid und einen Verteilerblock zum Verteilen des Kühlfluids aufweist, wobei im Verteilerblock eine Luftführung integriert ist, die derart ausgeführt und angeordnet ist, dass die luftdurchlässige Öffnung des Gehäuses über die Luftführung mit der Umgebungsluft in Kontakt steht.

Ferner wird in JP 2 123 064 eine Batterie offenbart, wobei die Batterie ein im Wesentlichen luftdichtes Gehäuse umfasst mit einer luftdurchlässigen Öffnung zum Druckausgleich. Die Batterie umfasst ferner eine Mehrzahl von im Gehäuse angeordneten Batteriezellen und eine aktive Kühleinrichtung, wobei die Kühleinrichtung zum Kühlen der Batteriezellen im Gehäuse geeignet ist und wobei die Kühleinrichtung ein Kühlfluid und einen Verteilerblock zum Verteilen des Kühlfluids aufweist, wobei im Verteilerblock eine Luftführung integriert ist, die derart ausgeführt und angeordnet ist, dass die luftdurchlässige Öffnung des Gehäuses über die Luftführung mit der Umgebungsluft in Kontakt steht.

In der US 2 007 023 6177 wird eine Vorrichtung für ein Batteriesystem offenbart, wobei die Vorrichtung geeignet ist, eine Temperatur von Gasen, die im Innern des Batteriesystems entstehen können, zu kühlen, bevor diese Gase in einen Außenbereich des Batteriesystems abgeleitet werden.

Ferner wird in der WO 2009/101725 A1 ein elektrischer Energiespeicher offenbart, wobei für Kühlungszwecke im Inneren ein Kühlungsmittel vorgesehen ist, wobei Filtervorrichtungen vorgesehen sind, die geeignet sind, das Austreten eines Gases oder eines Kühlmittels im Inneren des elektrischen Energiespeichers zu unterbinden.

### Offenbarung der Erfindung

Erfindungsgemäß wird eine Batterie nach Anspruch 1 zur Verfügung gestellt.

Der erfindungsgemäßen Batterie liegt die Erkenntnis zugrunde, dass die Kondensatbildung in einer Batterie dadurch unterbunden werden kann, dass die Umgebungsluft vor dem Eintritt in das Gehäuse abgekühlt wird, so dass gegebenenfalls enthaltene Feuchtigkeit zuvor auskondensiert. Diese Funktion ist in ein bereits vorhandenes Bauteil integriert, welches mit Kühlfluid durchströmt ist. Dies hat den Vorteil, dass bei der Montage der Batterie die Notwendigkeit für eine separate Baugruppe für die Lufttrocknung entfällt und damit der Herstellprozess beschleunigt wird und kostengünstiger durchführbar ist.

Die Schnittstelle zwischen dem Kühlsystem der aktiven Kühleinrichtung (zum Beispiel einem Wärmetauscher oder eines anderen gegebenenfalls bereits im Fahrzeug vorhandenen Kühlsystems) und der zu kühlenden Batterie wird von einem Verteilerblock gebildet, der das Kühlfluid zur Ausübung der Kühlfunktion über die Batterie verteilt. Der Verteilerblock ist dabei intensiv von gekühltem Kühlfluid durchflossen und stellt somit einen der kältesten Punkte der Batterie dar. Das Gehäuse der Batterie ist im Wesentlichen luftdicht ausgebildet und lässt den Eintritt von Umgebungsluft in das Innere des Gehäuses lediglich über eine luftdurchlässige Öffnung zum Druckausgleich zwischen der Umgebung und dem Inneren des Gehäuses zu. Wird die Umgebungsluft vor dem Eintritt in das Gehäuseinnere durch den Verteilerblock geführt, so kommt diese mit kühlen Oberflächen in Kontakt und kühlt sich ab. An den Kontaktflächen im Verteilerblock fällt die in der Umgebungsluft enthaltene Feuchtigkeit als Kondensat aus und steht im Gehäuseinneren nicht mehr zur Kondensatbildung zur Verfügung. Die Luft wird also vor Eintritt in das Batteriegehäuse effektiv getrocknet. Eine Kondensatbildung im Inneren des Gehäuses ist dadurch vermindert oder sogar unterbunden.

Die erfindungsgemäße Batterie umfasst eine Mehrzahl von in einem gemeinsamen Gehäuse angeordneten Batteriezellen. Die erfindungsgemäße Batterie weist dabei mehrere Batteriezellen auf, die zu einer funktionalen Einheit zusammengefasst sind. Die Batterie kann mehrere einzelne Batteriezellen umfassen oder ein oder mehrere Batteriemodule, wobei die Module jeweils eine Mehrzahl an Batteriezellen aufweisen, die in geeigneter Weise verbunden vorliegen. Dazu können die einzelnen Batteriezellen der Batterie derart elektrisch leitend miteinander verbunden vorliegen, dass diese zu gewünschten Batteriemodul- oder Batteriearchitekturen arrangiert vorliegen.

Unter einer Batteriezelle wird dabei ein elektrochemischer Energiespeicher verstanden, der eine Energie mittels elektrochemischer Prozesse speichern und bei Bedarf wieder bereitstellen kann. Grundsätzlich können in der erfindungsgemäßen Batterie Batteriezellen jedes Akkumulator- oder Batteriezelltyps verwendet werden. Bevorzugt umfasst die Batterie Batteriezellen vom Typ der Lithium-Ionen-Zellen, insbesondere vom Typ Li-Ion-Lithium-Ionen-Akku, LiPo-Lithium-Polymer-Akku, LiFe-Lithium-Metall-Akku, Li-Mn-Lithium-Mangan-Akku, LiFePO₄-Lithium-Eisen-Phosphat-Akkumulator, LiTi-Lithium-Titanat-Akku.

Bevorzugt handelt es sich bei der erfindungsgemäßen Batterie um eine Lithium-Ionen-Batterie, insbesondere um eine hochkapazitive Lithium-Ionen-Batterie, besonders bevorzugt um eine Batterie, zum Beispiel eine Lithium-Ionen-Batterie, mit einer nominalen Kapazität von ≥ 2Ah, bevorzugt von ≥ 3Ah.

Die erfindungsgemäße Batterie kann zusätzliche Komponenten aufweisen, zum Beispiel ein Batteriemanagementsystem (BMS) zur Steuerung oder Regelung des Batterieverhaltens.

Die erfindungsgemäße Batterie weist ein gemeinsames Gehäuse auf, in dem alle Batteriezellen oder -module der Batterie angeordnet sind. Unter dem Begriff "Gehäuse" ist dabei eine Vorrichtung zu verstehen, die einen Innenraum aufweist, der geeignet ist, eine Mehrzahl von Batteriezellen aufzunehmen. Bevorzugt grenzt das Gehäuse die enthaltenen Batteriezellen gegenüber der Umgebung nach allen Richtungen hin vollständig ab, wobei das Gehäuse verschließbare Zugänge, wie zum Beispiel Türen oder Deckel aufweisen kann. Unter einem Gehäuse kann dabei nicht bereits der unmittelbare Zellmantel verstanden werden, der die elektrochemischen Bestandteile einer einzelnen Batteriezelle unmittelbar von der Umwelt trennt. Bevorzugt kann das Gehäuse aus einem Material gefertigt sein, welches ein Metall, ein Metallblech oder eine Keramik umfasst oder daraus besteht. Besonders bevorzugt kann das Gehäuse aus einem Material gefertigt sein, welches Aluminium aufweist oder daraus besteht.

Das Gehäuse ist im Wesentlichen luftdicht ausgeführt und weist lediglich zum Zweck des Druckausgleichs zwischen Batterieinnenraum und Umgebung eine oder mehrere luftdurchlässige Öffnungen auf.

Die erfindungsgemäße Batterie weist eine aktive Kühleinrichtung zum Kühlen der Batterie auf. Die Kühleinrichtung umfasst ein Kühlfluid, welches, sobald es auf die gewünschte Kühltemperatur heruntergekühlt ist, über einen Verteilerblock derart über die Batterie verteilt wird, dass die Batteriezellen der Batterie gekühlt werden können. Die Kühlung des Kühlfluids erfolgt mittels eines Kühlsystems, welches Bestandteil der Kühleinrichtung der erfindungsgemäßen Batterie sein kann. Alternativ kann das Kühlsystem zur Kühlung des Kühlfluids auch als separate Vorrichtung ausgestaltet sein, die nicht Bestandteil der erfindungsgemäßen Batterie ist, beispielsweise als Kühlsystem oder Klimaanlage eines Kraftfahrzeugs. Bei dem Kühlfluid der aktiven Kühleinrichtung kann es sich insbesondere um ein flüssiges Kühlmittel handeln, bevorzugt ist das Kühlfluid Kühlwasser.

Der Verteilerblock ist derart beschaffen, dass darüber Kühlfluid über die Batterie verteilt werden kann um die Batteriezellen zu kühlen und stellt somit eine Baugruppe dar, die bezüglich dieser Funktion für den Einsatz in Batterien des Standes der Technik mit aktiver Kühleinrichtung bekannt und geeignet ist.

Zusätzlich ist im Verteilerblock der erfindungsgemäßen Batterie eine Luftführung integriert, um Umgebungsluft an die luftdurchlässige Öffnung des Gehäuses zu führen und somit einen Druckausgleich in der Batterie zu ermöglichen. Dazu ist die Luftführung derart ausgeführt und angeordnet, dass die luftdurchlässige Öffnung des Gehäuses über die Luftführung des Verteilerblocks mit der Umgebungsluft in Kontakt steht. Die Luftführung kann als Rohrsystem ausgebildet sein mit luftdurchlässigen Öffnungen an den zwei gegenüberliegenden Enden der Luftführung, während die Wände des Rohrsystems der Luftführung im Wesentlichen luftundurchlässig sind.

Der Verteilerblock weist einen Lufteinlass für den Eintritt von Umgebungsluft in die Luftführung und einen Luftauslass auf, der mit der luftdurchlässigen Öffnung des Gehäuses derart verbunden ist, dass der luftdurchlässigen Öffnung darüber Umgebungsluft zuführbar ist. Dabei sind Lufteinlass, Luftauslass und die dazwischen angeordnete Luftführung luftleitend miteinander verbunden und bilden eine funktionale Einheit, die dafür sorgt, dass die luftdurchlässige Öffnung bevorzugt ausschließlich über diese funktionale Einheit mit Umgebungsluft in Kontakt steht. Dazu kann der Verteilerblock beispielsweise unmittelbar auf der luftdurchlässigen Öffnung des Gehäuses angeordnet sein, so dass der Luftauslass des Verteilerblocks unmittelbar auf der luftdurchlässigen Öffnung des Gehäuses angeordnet ist und diese gegebenenfalls vollständig abdeckt.

Gelangt nun Umgebungsluft über den Lufteinlass in den Verteilerblock, wird diese dort abgekühlt, darin enthaltene Feuchtigkeit kondensiert aus und wird an den Oberflächen der Luftführung als Kondensat abgeschieden. Um dafür zu sorgen, dass dieses Kondensat effektiv aus dem Verteilerblock abgeführt werden kann, kann die funktionale Einheit aus Lufteinlass, Luftauslass und Luftführung im Verteilerblock derart angeordnet sein, dass während des Regel- oder Normalbetriebs der erfindungsgemäßen Batterie ein Gefälle besteht vom Luftauslass als höchstgelegenem Punkt über die Luftführung hin zum Lufteinlass als niedrigstem Punkt. Unter einem Regel- oder Normalbetrieb wird hierbei ein Betrieb der Batterie in einer Ausrichtung zum Horizont verstanden, in der die Batterie regelmäßig verwendet wird, zum Beispiel als Fahrzeugbatterie. Somit ist sichergestellt, dass Wasser aus der Luftführung über den Lufteinlass aus dem Verteilerblock abfließen kann. Bevorzugt ist dieses Gefälle als kontinuierliches Gefälle ausgebildet, besonders bevorzugt ist das Gefälle über die gesamte Länge der Luftführung kontinuierlich ausgeprägt. Durch das kontinuierliche Gefälle können sich im Verlauf der Luftführung keine größeren Wasseransammlungen bilden.

Um zu verhindern, dass Kondensat aus dem Verteilerblock in das Gehäuseinnere der Batterie gelangt, weist der Luftauslass des Verteilerblocks eine wasserundurchlässige Membran auf, die den unmittelbaren Durchtritt von flüssigem Kondensat aus dem Verteilerblock durch die luftdurchlässige Öffnung des Gehäuses in das Gehäuseinnere im Wesentlichen unterbindet. Bevorzugt wird hierzu eine mikroporöse Membran eingesetzt, die luftdurchlässig aber wasserundurchlässig ist. Die wasserundurchlässige Membran kann beispielsweise aus einem Werkstoff gefertigt sein, der Polytetrafluoroethylen enthält oder daraus besteht.

Die Lufttrocknungswirkung im Verteilerblock der erfindungsgemäßen Batterie kann dadurch erhöht werden, dass die Strecke, die die Umgebungsluft zurücklegen muss, um vom Lufteinlass zum Luftauslass zu gelangen, möglichst lang gewählt ist. Je länger die Wegstrecke der Luft durch den Verteilerblock ist, desto länger ist die Luft den kühlen Bedingungen im Verteilerblock ausgesetzt und desto mehr wird die Luft abgekühlt. Da kühlere Luft weniger Feuchtigkeit transportieren kann, wird bei einer längeren Wegstrecke der Luft auch mehr Feuchtigkeit entzogen. Eine Verlängerung der Wegstrecke der Luft im Verteilerblock kann beispielsweise dadurch erreicht werden, dass die Luftführung nicht als kürzest mögliche Verbindung zwischen dem Lufteinlass und dem Luftauslass des Verteilerblocks ausgestaltet ist, sondern beispielsweise eine Mehrzahl von Richtungsänderungen und/oder Windungen aufweist. Bevorzugt kann die Luftführung schleifen- oder mäanderförmig ausgebildet sein. Besonders bevorzugt ist die Luftführung im Verteilerblock derart ausgebildet, dass Luft vom Lufteinlass zum Luftauslass eine Strecke zurücklegen muss, die mindestens doppelt so lang ist, wie der kürzeste Abstand des Lufteinlasses vom Luftauslass des Verteilerblocks. Die Strecke kann auch mindestens das vier- oder zehnfache des kürzesten Abstandes des Lufteinlasses vom Luftauslass des Verteilerblocks betragen.

Für eine möglichst effektive Trocknung der Luft im Verteilerblock ist es vorteilhaft, wenn, zusätzlich oder alternativ zur Verlängerung der Wegstrecke, die Temperaturübertragung zwischen dem kühlen Verteilerblock und der relativ dazu wärmeren Umgebungsluft möglichst schnell erfolgt. Dies kann beispielsweise dadurch erreicht werden, dass die Rohrleitung der Luftführung aus einem Werkstoff gefertigt ist, dessen Wärmeleitfähigkeit einen schnellen Temperaturausgleich zwischen Verteilerblock und in der Luftführung enthaltener Luft erlaubt. Bevorzugt besteht die Luftführung aus einem Werkstoff, dessen Wärmeleitfähigkeit λ ≥ 10 W/(m*K) beträgt, besonders bevorzugt λ ≥ 50 W/(m*K), ganz besonders bevorzugt λ ≥ 100 W/(m*K). Als besonders geeignete Werkstoffe sind beispielhaft Werkstoffe genannt, die Al enthalten oder eine Legierung davon.

Für eine möglichst effektive Trocknung der Luft im Verteilerblock ist es weiterhin vorteilhaft, wenn, zusätzlich oder alternativ zur Verlängerung der Wegstrecke oder Verwendung von Werkstoffen mit geeigneter Wärmeleitzahl, die Oberfläche, die zur Temperaturübertragung zur Verfügung steht, möglichst groß ist. Dies kann einerseits, wie bereits oben erwähnt, durch die Wahl einer möglichst langen Wegstrecke erreicht werden. Daneben kann die Oberfläche aber auch dadurch vergrößert werden, dass die Innenoberfläche der Luftführung Mittel zur Oberflächenvergrößerung aufweist. Solche Mittel können beispielsweise darin bestehen, dass die Innenoberfläche der Luftführung oder im Lumen der Luftführung zusätzlich Rippen, Rillen, Wände, Flügel und/oder Stege angeordnet sind.

Die vorliegende Erfindung bezieht sich auch auf einen Verteilerblock für den Einsatz in einer erfindungsgemäßen Batterie. Dabei gelten alle oben gemachten Ausführungen bezüglich der Verteilerblocks der erfindungsgemäßen Batterie auch für den erfindungsgemäßen Verteilerblock.

Die vorliegende Erfindung umfasst auch ein Kraftfahrzeug, welches eine erfindungsgemäße Batterie enthält. Dabei kommt es nicht darauf an, dass Kraftfahrzeug und Batterie eine bauliche Einheit bilden, sondern, dass Kraftfahrzeug und erfindungsgemäße Batterie derart funktional in Kontakt stehen, dass die Batterie ihre Funktion während des Betriebs des Kraftfahrzeugs erfüllen kann. Dabei sind unter dem Begriff "Kraftfahrzeug" alle angetriebenen Fahrzeuge zu verstehen, die eine Batterie zur Energieversorgung von mindestens einer Komponente des Kraftfahrzeugs aufweisen, unabhängig davon, welchen Antrieb diese Kraftfahrzeuge aufweisen. Insbesondere umfasst der Begriff "Kraftfahrzeug" elektrische Hybridfahrzeuge (HEV), Plug-In-Hybridfahrzeuge (PHEV), Elektrofahrzeuge (EV), Brennstoffzellenfahrzeuge, sowie alle Fahrzeuge, die eine Batterie zur mindestens teilweisen Versorgung mit elektrischer Energie einsetzen.

### Zeichnungen

Ausführungsbeispiele der Erfindung werden anhand der Zeichnungen und der nachfolgenden Beschreibung näher erläutert. Es zeigen:
Figur 1 eine perspektivische Darstellung eines Verteilerblocks einer erfindungsgemäßen Batterie von schräg oben, wobei innenliegende Bauteile sichtbar dargestellt sind, und
Figur 2 eine perspektivische Darstellung eines Verteilerblocks einer erfindungsgemäßen Batterie von der Seite, wobei innenliegende Bauteile sichtbar dargestellt sind.

### Ausführungsformen der Erfindung

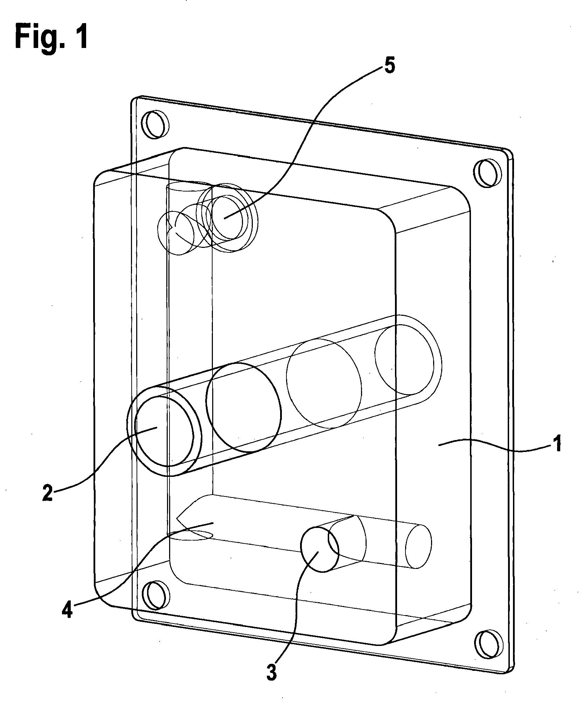

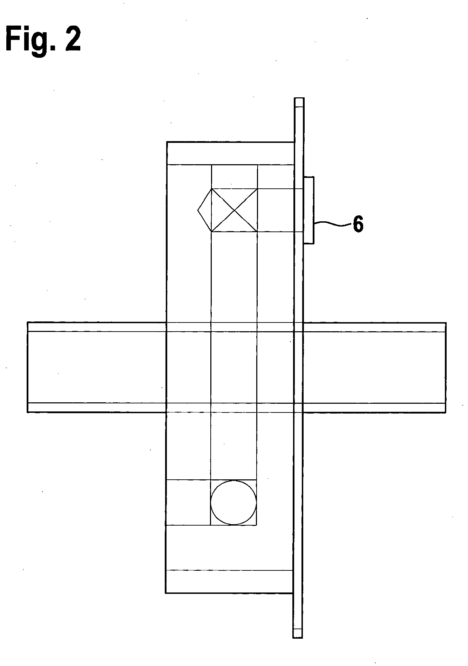

In Figur 1 ist ein Verteilerblock einer erfindungsgemäßen Batterie in perspektivischer Ansicht von schräg oben gezeigt. Ausgewählte innenliegende Bauteile sind sichtbar gemacht. Der Verteilerblock 1 weist einen Anschluss 2 für das Kühlfluid auf, über den die Batterie mit Kühlfluid versorgt wird. Zusätzlich weist der Verteilerblock 1 auf der dem Batteriegehäuse abgewandten Seite einen Lufteinlass 3 auf. Auf der dem Batteriegehäuse zugewandten Seite weist der Verteilerblock einen Luftauslass 5 auf, der nach der Montage des Verteilerblocks 1 am Batteriegehäuse auf einer luftdurchlässigen Öffnung im Batteriegehäuse zu liegen kommt. Zwischen dem Lufteinlass 3 und dem Luftauslass 5 ist im Verteilerblock 1 eine Luftführung 4 vorgesehen, die gemeinsam mit dem Lufteinlass 3 und dem Luftauslass 5 eine funktionale Einheit bildet. Über diese funktionale Einheit kann der luftdurchlässigen Öffnung des Batteriegehäuses Umgebungsluft zugeführt werden. Bevorzugt ist die erfindungsgemäße Batterie derart ausgebildet, dass der Batterieinnenraum ausschließlich über diese funktionale Einheit mit der Umgebungsluft in Kontakt steht. Dabei ist der Luftauslass 5 höher gelegen als der Lufteinlass 3 und die Luftführung 4 ist mit einem kontinuierlichen (ununterbrochenen) Gefälle zwischen dem Luftauslass 5 als höchstem Punkt und dem Lufteinlass 3 als dem niedrigsten Punkt ausgebildet. Dadurch ist sichergestellt, dass in der Luftführung 4 des Verteilerblocks 1 abgeschiedenes flüssiges Kondensat in Richtung des Lufteinlasses 3 fließt und darüber aus dem Verteilerblock 1 abgeführt werden kann. Wie in Figur 2 dargestellt, kann der Luftauslass 5 eine wasserundurchlässige Membran 6 aufweisen, die verhindert, dass flüssiges Kondensat aus dem Verteilerblock 1 in Richtung des Batterieinnenraumes gelangt.

## Patentansprüche

1. Batterie umfassend ein luftdichtes Gehäuse mit einer luftdurchlässigen Öffnung zum Druckausgleich, eine Mehrzahl von im Gehäuse angeordneten Batteriezellen und eine aktive Kühleinrichtung zum Kühlen der Batteriezellen im Gehäuse, wobei die Kühleinrichtung ein Kühlfluid und einen Verteilerblock (1) zum Verteilen des Kühlfluids aufweist, **dadurch gekennzeichnet, dass**
im Verteilerblock (1) eine Luftführung (4) integriert ist, die derart ausgeführt und angeordnet ist, dass die luftdurchlässige Öffnung des Gehäuses über die Luftführung (4) mit der Umgebungsluft in Kontakt steht, wobei der Verteilerblock (1) einen Lufteinlass (3) für die Aufnahme von Umgebungsluft und einen Luftauslass (5), der mit der luftdurchlässigen Öffnung des Gehäuses verbunden ist, aufweist, wobei die Luftführung (4) den Lufteinlass (3) und den Luftauslass (5) luftleitend miteinander verbindet und wobei der Luftauslass (5) eine wasserundurchlässige Membran (6) aufweist, die den Durchtritt von flüssigem Wasser aus dem Verteilerblock (1) durch die luftdurchlässige Öffnung des Gehäuses in das Gehäuseinnere im Wesentlichen unterbindet.

2. Batterie nach Anspruch 1, wobei der Luftauslass (5) des Verteilerblocks (1) unmittelbar auf der luftdurchlässigen Öffnung des Gehäuses angeordnet ist.

3. Batterie nach einem der Ansprüche 1 oder 2, wobei der Lufteinlass (3), der Luftauslass (5) und die Luftführung (4) derart im Verteilerblock (1) angeordnet und ausgeführt sind, dass während eines Normalbetriebs der Batterie ein Gefälle vom Luftauslass (5) über die Luftführung (4) zum Lufteinlass (3) hin besteht.

4. Batterie nach Anspruch 3, wobei das Gefälle in der Luftführung (4) kontinuierlich ist.

5. Batterie nach einem der Ansprüche 1 bis 4, wobei die Luftführung (4) im Verteilerblock (1) derart ausgebildet ist, dass Luft vom Lufteinlass (3) zum Luftauslass (5) eine Strecke zurücklegen muss, die mindesten doppelt so lang ist, wie der kürzeste Abstand des Lufteinlasses (3) vom Luftauslass (5).

6. Batterie nach einem der vorhergehenden Ansprüche, wobei die Luftführung (4) eine Mehrzahl von Windungen aufweist, bevorzugt schleifen- oder mäanderförmig ausgebildet ist.

7. Batterie nach einem der vorhergehenden Ansprüche, wobei die Luftführung (4) aus einem Werkstoff besteht, dessen Wärmeleitfähigkeit λ ≥ 10 W/(m*K) beträgt.

8. Batterie nach einem der vorhergehenden Ansprüche, wobei die Luftführung (4) aus einem Werkstoff besteht, der Al enthält oder eine Legierung davon.

9. Batterie nach einem der vorhergehenden Ansprüche, wobei die Innenoberfläche der Luftführung (4) Mittel zur Oberflächenvergrößerung aufweist, insbesondere Rippen, Rillen, Flügel, Wände und/oder Stege.

10. Batterie nach einem der vorhergehenden Ansprüche, wobei es sich bei dem Kühlfluid der aktiven Kühleinrichtung um ein flüssiges Kühlmittel handelt, bevorzugt um Kühlwasser.

11. Kraftfahrzeug enthaltend eine Batterie nach einem der Ansprüche 1 bis 10.

12. Verteilerblock (1) für die Verwendung in einer Batterie nach einem der Ansprüche 1 bis 10, wobei im Verteilerblock (1) eine Luftführung (4) integriert ist, die derart ausgeführt und angeordnet ist, dass die luftdurchlässige Öffnung des Gehäuses über die Luftführung (4) mit der Umgebungsluft in Kontakt steht, wobei der Verteilerblock (1) einen Lufteinlass (3) für die Aufnahme von Umgebungsluft und einen Luftauslass (5), der mit der luftdurchlässigen Öffnung des Gehäuses verbunden ist, aufweist, wobei die Luftführung (4) den Lufteinlass (3) und den Luftauslass (5) luftleitend miteinander verbindet und wobei der Luftauslass (5) eine wasserundurchlässige Membran (6) aufweist, die den Durchtritt von flüssigem Wasser aus dem Verteilerblock (1) durch die luftdurchlässige Öffnung des Gehäuses in das Gehäuseinnere im Wesentlichen unterbindet.

## Claims

1. Battery comprising an air-tight casing with an air-permeable aperture for pressure equalization, a plurality of battery cells arranged in the casing and an active cooling device for cooling the battery cells in the casing, the cooling device having a cooling fluid and a distributor block (1) for distributing the cooling fluid,
**characterized in that**
an air duct (4) is integrated in the distributor block (1) and is configured and arranged in such a way that the air-permeable aperture in the casing is in contact with ambient air via the air duct (4), the distributor block (1) having an air inlet (3) for receiving ambient air and an air outlet (5), which is connected to the air-permeable aperture in the casing, the air duct (4) connecting the air inlet (3) and the air outlet (5) to one another in an air-conducting manner and the air outlet (5) having a water-impermeable membrane (6), which substantially prevents liquid water from the distributor block (1) from passing through the air-permeable aperture in the casing into the interior of the casing.

2. Battery according to Claim 1, the air outlet (5) of the distributor block (1) being arranged directly on the air-permeable aperture in the casing.

3. Battery according to either of Claims 1 and 2, the air inlet (3), the air outlet (5) and the air duct (4) being arranged and configured in the distributor block (1) in such a way that during normal operation of the battery there is a gradient from the air outlet (5) via the air duct (4) to the air inlet (3).

4. Battery according to Claim 3, the gradient in the air duct (4) being continuous.

5. Battery according to one of Claims 1 to 4, the air duct (4) being formed in the distributor block (1) in such a way that air from the air inlet (3) to the air outlet (5) must cover a distance that is at least twice as long as the shortest distance of the air inlet (3) from the air outlet (5).

6. Battery according to one of the preceding claims, the air duct (4) having a plurality of turns, preferably being formed in a looping or meandering manner.

7. Battery according to one of the preceding claims, the air duct (4) consisting of a material of which the thermal conductivity is λ ≥ 10 W/(m*K).

8. Battery according to one of the preceding claims, the air duct (4) consisting of a material which contains Al or an alloy thereof.

9. Battery according to one of the preceding claims, the inner surface of the air duct (4) having means for increasing the surface area, in particular ribs, grooves, fins, walls and/or webs.

10. Battery according to one of the preceding claims, the cooling fluid of the active cooling device being a liquid coolant, preferably cooling water.

11. Motor vehicle containing a battery according to one of Claims 1 to 10.

12. Distributor block (1) for use in a battery according to one of Claims 1 to 10, an air duct (4) being integrated in the distributor block (1) and configured and arranged in such a way that the air-permeable aperture in the casing is in contact with ambient air via the air duct (4), the distributor block (1) having an air inlet (3) for receiving ambient air and an air outlet (5), which is connected to the air-permeable aperture in the casing, the air duct (4) connecting the air inlet (3) and the air outlet (5) to one another in an air-conducting manner and the air outlet (5) having a water-impermeable membrane (6), which substantially prevents liquid water from the distributor block (1) from passing through the air-permeable aperture in the casing into the interior of the casing.

## Revendications

1. Batterie comprenant un boîtier étanche à l'air présentant une ouverture perméable à l'air pour l'équilibre de pression, une pluralité d'éléments de batterie disposés dans le boîtier et un dispositif de refroidissement actif pour le refroidissement des éléments de batterie dans le boîtier, dans lequel le dispositif de refroidissement comporte un fluide de refroidissement et un bloc distributeur (1) pour la distribution du fluide de refroidissement,
**caractérisée en ce qu'**un guide d'air (4) est intégré dans le bloc distributeur (1), lequel guide d'air est réalisé et est disposé de manière à ce que l'ouverture perméable à l'air du boîtier soit en contact avec l'air ambiant par l'intermédiaire du guide d'air (4), dans lequel le bloc distributeur (1) comporte un orifice d'entrée d'air (3) permettant de recevoir de l'air ambiant et un orifice de sortie d'air (5) qui est relié à l'ouverture perméable à l'air du boîtier, dans lequel le guide d'air (4) relie l'un à l'autre, de manière conductrice de l'air, l'orifice d'entrée d'air (3) et l'orifice de sortie d'air (5) et dans lequel l'orifice de sortie d'air (5) comporte une membrane (6) imperméable à l'eau qui empêche sensiblement la pénétration d'eau liquide provenant du bloc distributeur (1) à travers l'ouverture perméable à l'air du boîtier vers l'intérieur du boîtier.

2. Batterie selon la revendication 1, dans laquelle l'orifice de sortie d'air (5) du bloc distributeur (1) est disposé directement sur l'ouverture perméable à l'air du boîtier.

3. Batterie selon l'une quelconque des revendications 1 ou 2, dans laquelle l'orifice d'entrée d'air (3), l'orifice de sortie d'air (5) et le guide d'air (4) sont disposés dans le bloc distributeur (1) et sont réalisés de manière à ce que, pendant un fonctionnement normal de la batterie, il se produise une descente depuis l'orifice de sortie d'air (5), par l'intermédiaire du guide d'air (4), vers l'orifice d'entrée d'air (3).

4. Batterie selon la revendication 3, dans laquelle la descente dans le guide d'air (4) est continue.

5. Batterie selon l'une quelconque des revendications 1 à 4, dans laquelle le guide d'air (4) est réalisé dans le bloc distributeur (1) de manière à ce que l'air allant de l'orifice d'entrée d'air (3) vers l'orifice de sortie d'air (5) parcoure une étendue qui est au moins deux fois plus longue que la distance la plus faible de l'orifice d'entrée d'air (3) par rapport à l'orifice de sortie d'air (5).

6. Batterie selon l'une quelconque des revendications précédentes, dans laquelle le guide d'air (4) comporte une pluralité d'enroulements, et dans laquelle celui-ci est de préférence réalisé sous forme de boucles ou sous forme sinueuse.

7. Batterie selon l'une quelconque des revendications précédentes, dans laquelle le guide d'air (4) est constitué d'un matériau dont la conductivité thermique λ est ≥ 10 W/(m*K).

8. Batterie selon l'une quelconque des revendications précédentes, dans laquelle le guide d'air (4) est constitué d'un matériau contenant de l'Al ou un alliage de celui-ci.

9. Batterie selon l'une quelconque des revendications précédentes, dans laquelle la surface interne du guide d'air (4) comporte des moyens destinés à augmenter la surface, notamment des nervures, des rainures, des ailettes, des parois et/ou des arêtes.

10. Batterie selon l'une quelconque des revendications précédentes, dans laquelle le fluide de refroidissement du dispositif de refroidissement actif est un agent de refroidissement liquide, de préférence de l'eau de refroidissement.

11. Véhicule automobile comportant une batterie selon l'une quelconque des revendications 1 à 10.

12. Bloc distributeur (1) destiné à être utilisé dans une batterie selon l'une quelconque des revendications 1 à 10, dans lequel un guide d'air (4) est intégré dans le bloc distributeur (1), lequel guide d'air est réalisé et disposé de manière à ce que l'ouverture perméable à l'air du boîtier soit en contact par l'intermédiaire du guide d'air (4) avec l'air ambiant, dans lequel le bloc distributeur (1) comporte un orifice d'entrée d'air (3) destiné à recevoir de l'air ambiant et un orifice de sortie d'air (5) qui est relié à l'ouverture perméable à l'air du boîtier, dans lequel le guide d'air (4) relie l'un à l'autre, de manière conductrice de l'air, l'orifice d'entrée d'air (3) et l'orifice de sortie d'air (5), et dans lequel l'orifice de sortie d'air (5) comporte une membrane imperméable à l'eau (6) qui empêche sensiblement le passage d'eau liquide provenant du bloc distributeur (1) à travers l'ouverture perméable à l'air du boîtier vers l'intérieur du boîtier.
